# EUROPÄISCHE PATENTANMELDUNG

(11) **EP 1 947 728 A2**
(43) Veröffentlichungstag der Anmeldung: **23.07.2008**
(21) Anmeldenummer: 08007530.2
(22) Anmeldetag: 23.07.2004
(51) Int. Cl.: H01M 8/24

(54) **Vorrichtung zum Befestigen einer Brennstoffzellenanordnung an einem Gehäuse**

(30) Priorität: 25.07.2003 DE 10334130
(62) Teilanmeldung aus: 04762489.5
(71) Anmelder: Staxera GmbH, 01237 Dresden (DE)
(72) Erfinder: Die Erfindernennung liegt noch nicht vor
(74) Vertreter: Schumacher & Willsau

(57) **Zusammenfassung**

Die Erfindung betrifft eine Vorrichtung zum Befestigen einer Brennstoffzellenanordnung an einem Gehäuse (38).

Erfindungsgemäß ist vorgesehen, dass die Brennstoffzellenanordnung über ein mit einem Brennstoffzellenstapel (12) in Verbindung stehendes Element (24) unter Verwendung elastischer Mittel mit dem Gehäuse (38) in Verbindung steht.

## Beschreibung

Die Erfindung betrifft eine Vorrichtung zum Befestigen einer Brennstoffzellenanordnung an einem Gehäuse.

Derartige Anordnungen sind bekannt und kommen beispielsweise bei SOFC-Brennstoffzellen ("Solid Oxid Fuel Cell") zum Einsatz. Da die von einer Brennstoffzelle gelieferte Spannung durch die elektrochemischen Vorgänge in der Brennstoffzelle festgelegt ist, werden mehrere hintereinander geschaltete Brennstoffzellen verwendet, um ein Vielfaches dieser Spannung zur Verfügung zu stellen, wobei sich die Übereinanderschichtung der einzelnen aus Anode, Elektrolyt und Kathode bestehenden Brennstoffzellen bewährt hat.

Bei diesem Übereinanderschichten der Brennstoffzellen begegnet man Problemen, die insbesondere mit der mechanischen Stabilität des Brennstoffzellenstapels in Verbindung stehen. Die Bereitstellung einer ausreichenden Stabilität ist von grundsätzlicher Bedeutung und insbesondere bei mobilen Anwendungen, beispielsweise im Kraftfahrzeugbereich, besonders wichtig.

Zahlreiche Lösungen zur Erhöhung der Stabilität von Brennstoffzellenstapeln sind bekannt. Hierzu zählt das Verkleben der einzelnen Stapelschichten, zum Beispiel durch Glaspaste, sowie das Aufbringen einer externen Kraft auf die Stapelenden, das heißt insbesondere auf die Endplatten, der Brennstoffzellenstapel. Ebenfalls ist es bekannt, lösbare kompressible Dichtungen zwischen den einzelnen Lagen zu verwenden und zusätzlich eine Kraft von außen auf die Stapelenden aufzubringen.

Diese und andere Lösungen zur Stabilitätserhöhung von Brennstoffzellen sind dazu geeignet, Teilprobleme der grundsätzlichen Stabilitätsproblematik zu lösen, sie sind jedoch nicht in der Lage, eine zufriedenstellende mechanische Belastbarkeit der Brennstoffzellenanordnungen bereitzustellen. Beispielsweise können verklebte Brennstoffzellenstapel durch Vibrationen beschädigt werden, was dazu führen kann, dass sie bei Temperaturen oberhalb von 800 °C auseinanderfallen. Diese Temperaturen werden beim Betrieb von SOFC-Brennstoffzellen ohne weiteres erreicht. Kompressible Dichtungen, die durch eine externe starre Verspannung komprimiert werden, dichten häufig nur unzureichend ab.

Der Erfindung liegt die Aufgabe zugrunde, die vorgenannten Probleme zumindest teilweise zu überwinden und insbesondere eine Brennstoffzellenanordnung zur Verfügung zu stellen, die der Anordnung verbesserte Stabilitätseigenschaften verleiht.

Diese Aufgabe wird mit den Merkmalen des unabhängigen Anspruchs gelöst.

Vorteilhafte Ausführungsformen der Erfindung sind in den abhängigen Ansprüche angegeben.

Die Erfindung baut auf der gattungsgemäßen Vorrichtung dadurch auf, dass die Brennstoffzellenanordnung über ein mit einem Brennstoffzellenstapel in Verbindung stehendes Element unter Verwendung elastischer Mittel mit dem Gehäuse in Verbindung steht.

Weiterhin kann vorgesehen sein, dass der Brennstoffzellenstapel mehrere Brennstoffzellen und eine erste Endplatte sowie eine zweite Endplatte umfasst, die den Brennstoffzellenstapel an seinen Stapelenden begrenzen, wobei mindestens eine Kraftübertragungseinrichtung vorgesehen ist, die auf die erste Endplatte eine erste Kraft in Richtung der zweiten Endplatte und auf die zweite Endplatte eine zweite Kraft in Richtung der ersten Endplatte überträgt, wobei an der Kraftübertragung elastische Mittel beteiligt sind. Die einzelnen Brennstoffzellenelemente können somit ohne besondere Vorkehrungen gestapelt und an ihren Stapelenden mit Endplatten versehen werden. Die mechanische Stabilität wird durch die Kraftübertragung auf die Endplatten zur Verfügung gestellt, wobei vorteilhafte mechanische Eigenschaften im Hinblick auf eventuell auftretende Vibrationen durch an der Kraftübertragung beteiligte elastische Mittel geschaffen werden.

Die erfindungsgemäße Vorrichtung ist in vorteilhafter Weise dadurch weitergebildet, dass der Brennstoffzellenstapel und die Endplatten mindestens eine sich im Wesentlichen senkrecht zu den Endplatten erstreckende Durchgangsöffnung aufweisen, dass in der mindestens einen Durchgangsöffnung ein Kraftübertragungselement angeordnet ist, das über die obere und die untere Endplatte hinausragt, dass das Kraftübertragungselement an einem über eine erste Endplatte hinausragenden Bereich einen ersten Kraftaufnahmebereich aufweist oder mit einem solchen in Verbindung steht, der sich mittelbar oder unmittelbar an der ersten Endplatte abstützt, und dass das Kraftübertragungselement an dem über die zweite Endplatte hinausragenden Bereich einen zweiten Kraftaufnahmebereich aufweist oder mit einem solchen in Verbindung steht, der über die elastischen Mittel eine Kraft auf die zweite Endplatte ausübt. Um eine ausreichende mechanische Stabilität unter Bereitstellung einer gewissen Elastizität zur Verfügung zu stellen, ist es ausreichend, eine der beiden Endplatten über elastische Mittel mit Kraft zu beaufschlagen, während auf die andere Endplatte eine starre Gegenkraft ausgeübt werden kann.

Nützlicherweise ist vorgesehen, dass das Kraftübertragungselement einen im Wesentlichen zylindrischen Abschnitt aufweist, der teilweise innerhalb der Durchgangsöffnung angeordnet ist, dass der erste Kraftaufnahmebereich als Abschlussplatte des zylindrischen Abschnitts ausgebildet ist, die einen größeren Radius als die Durchgangsöffnung durch die erste Endplatte aufweist, und dass der zweite Kraftaufnahmebereich ein mit dem zylindrischen Abschnitt in Verbindung stehender, den zylindrischen Abschnitt umgebender Endring ist, wobei der Endring mehrteilig ausgebildet sein kann. Die Kraftübertragungseinrichtung ist somit nach Art eines Zugankers ausgebildet, der in eine Durchgangsöffnung eingeführt werden kann, bis er mit seiner Abschlussplatte an einer der Endplatten unmittelbar oder mittelbar anschlägt. An dem anderen endseitigen Bereich wird dann ein zweiter Kraftaufnahmebereich befestigt, von dem dann über die elastischen Mittel Kraft auf die andere Endplatte übertragen werden kann.

In diesem Zusammenhang ist es von Vorteil, dass die elastischen Mittel als den zylindrischen Bereich umgebende Feder ausgebildet sind, die sich auf dem den zylindrischen Abschnitt umgebenden Endring abstützt. Eine solche Feder kann als Teller- oder Schraubenfeder ausgebildet sein.

In diesem Zusammenhang ist es nützlich, dass die Feder Kraft auf die zweite Endplatte überträgt, indem sie sich an einem den zylindrischen Abschnitt des Kraftübertragungselements umgebenden beweglichen Druckring abstützt, der sich an seiner der Feder abgewandten Seite an der zweiten Endplatte abstützt. Der Abstand zwischen dem Endring und der zweiten Endplatte muss also nicht vollständig durch die Feder überbrückt werden. Vielmehr ist es möglich, insbesondere den der zweiten Endplatte zugewandten Weg zwischen Endring und Endplatte durch einen Druckring zu überbrücken.

Es ist bevorzugt, dass das Kraftübertragungselement zumindest vorwiegend aus elektrisch isolierendem Material besteht. Es wird vorzugsweise keramisches Isolationsmaterial verwendet. Hierdurch ist sichergestellt, dass der Zuganker den Stapel nicht elektrisch kurzschließt. Aufgrund der geringen Wärmeleitfähigkeit elektrisch isolierender Elemente ist weiterhin sichergestellt, dass keine übermäßige Wärme über den Zuganker in Bereiche transportiert wird, in denen diese Wärme von Nachteil wäre.

Es kann aber auch vorgesehen sein, dass das Kraftübertragungselement zumindest vorwiegend aus Metall besteht und dass Isolationsmittel zum Isolieren des Kraftübertragungselementes gegen elektrisch leitende Bereiche des Brennstoffzellenstapels beziehungsweise die Endplatten vorgesehen sind. Diese Lösung ist kostengünstiger als die Lösung mit einem keramischen Zuganker. Die Isolationsmittel können beispielsweise als ein Ring aus keramischem Material realisiert sein, der zwischen der Abschlussplatte des Zugankers und der zugehörigen Endplatte angeordnet ist.

Bei besonders nützlichen Ausführungsformen der vorliegenden Erfindung ist vorgesehen, dass der Endring axial verstellbar ist, so dass sich die von den elastischen Mitteln aufgebrachte Kraft variieren lässt. Diese Variation kann sowohl bei der anfänglichen Einstellung der aufzubringenden Kraft nützlich sein als auch bei späteren Wartungsarbeiten, zum Beispiel dann, wenn sich nach gewissen Betriebszeiten der Brennstoffzelle die mechanischen Verhältnisse der Brennstoffzellenanordnung, insbesondere aufgrund der stets auftretenden hohen Prozesstemperaturen, ändern.

Besonders nützlich ist es, dass die Brennstoffzellenanordnung ein Gehäuse umfasst, das an seiner Innenseite eine Wärmeisolation aufweist. Auf diese Weise kann sichergestellt werden, dass Komponenten, die die Brennstoffzellenanordnung umgeben, beziehungsweise Komponenten der Brennstoffzellenanordnung, die außerhalb des Gehäuses angeordnet sind, nicht in unerwünschter Weise unter einer erhöhten Wärmezufuhr leiden.

Es ist bevorzugt, dass das Kraftübertragungselement elastisch mit dem Gehäuse in Verbindung steht. Hierdurch wird der gesamten Anordnung nochmals eine Dämpfungseigenschaft übertragen, die insbesondere für mobile Anwendungen besonders von Vorteil ist.

In diesem Zusammenhang kann von Nutzen sein, dass die elastische Verbindung des Kraftübertragungselementes mit dem Gehäuse eine Tellerfeder umfasst, die mit dem Kraftübertragungselement verbunden ist und sich an der Außenseite des Gehäuses abstützt. Hier ist als besonderer Vorteil zu verzeichnen, dass die Tellerfeder vollständig außerhalb des mit einer Isolationsschicht versehenen Gehäuses angeordnet ist, so dass die Tellerfeder nicht durch die hohen am Brennstoffzellenstapel auftretenden Temperaturen beeinflusst wird. Hierdurch kann die Tellerfeder aus kostengünstigen Materialien gefertigt werden, da sie nicht in der Lage sein muss, ihre elastischen Eigenschaften bei hohen Temperaturen aufrechtzuerhalten.

Nützlicherweise ist vorgesehen, dass der Endring zweiteilig ist und dass die Verbindung der Tellerfeder mit dem Kraftübertragungselement durch Einpressen der Tellerfeder zwischen die Endringteile erfolgt. Dabei handelt es sich um eine zuverlässige und kostengünstige Befestigungsmöglichkeit der Tellerfeder an dem Zuganker.

Es ist weiterhin von Vorteil, dass die elastischen Mittel zur Übertragung von Kraft auf die Endplatten außerhalb des Gehäuses angeordnet sind. Dies hängt insbesondere wiederum damit zusammen, dass hierdurch die elastischen Mittel, das heißt insbesondere die Feder zwischen Endring und Druckring, in einem relativ kalten Bereich liegen kann, so dass auch für diese Feder kostengünstige Materialien verwendet werden können.

Ebenfalls ist es nützlich, dass den Brennstoffzellenstapel umgebende Bereiche innerhalb des Gehäuses mit faserförmigem Isolationsmaterial gefüllt sind. Dieses stellt eine weitere thermische Isolierung zur Verfügung und dient gleichzeitig als Dämpfungsmittel im Hinblick auf mechanische Schwingungen des Brennstoffzellenstapels.

Die Vorrichtung ist in besonders nützlicher Weise so gestaltet, dass drei Durchgangsöffnungen und drei diesen Durchgangsöffnungen zugeordnete Kraftübertragungselemente vorgesehen sind. Hierdurch wird der Brennstoffzellenstapel an mehreren Stellen mit Kraft beaufschlagt, was die Gesamtstabilität verbessert. Das Bereitstellen von drei Angriffspunkten auf jeder Seite des Brennstoffzellenstapels hat besonders geringe Spannungen aufgrund der Wirkung der Zuganker zur Folge, da die drei Angriffspunkte in jedem Fall eine Ebene definieren, der sich der Brennstoffzellenstapel in seiner Lage anpassen kann.

Der Erfindung liegt die Erkenntnis zugrunde, dass einer Brennstoffzellenanordnung durch die Übertragung von Kraft auf die Stapelenden durch elastische Mittel eine hohe mechanische Stabilität vermittelt werden kann, die insbesondere geeignet ist, Vibrationsschwingungen entgegenzuwirken. Die Brennstoffzellenanordnung ist einfach zu montieren, und sie kann aus kostengünstigen Materialien hergestellt werden. Da es sich um ein geschlossenes System handelt, bleibt die Trennung der Abgasströme möglich, so dass keine sofortige Verbrennung von Abgas und Abluft erfolgt. Mithin stellt die vorliegende Erfindung eine flexible Systemanbindung zur Verfügung. Da die zur Vibrationsdämpfung erforderliche Elastizität der Anordnung durch die elastischen Mittel der Kraftübertragungseinrichtung zur Verfügung gestellt wird, können nicht lösbare, sehr dichte Dichtungen im System eingesetzt werden, bei denen es insbesondere nicht auf die Bereitstellung einer Kompressibilität ankommt. Folglich können dem System gute Dichteigenschaften übertragen werden. Die Herstellung und die Wartung der Anordnung werden noch dadurch vereinfacht beziehungsweise verbessert, dass es möglich ist, durch einen axial verschiebbaren Endring die auf den Brennstoffzellenstapel ausgeübte Kraft zu verändern.

Die Erfindung wird nun mit Bezug auf die begleitende Zeichnung anhand einer bevorzugten Ausführungsform beispielhaft erläutert.

Dabei zeigt:

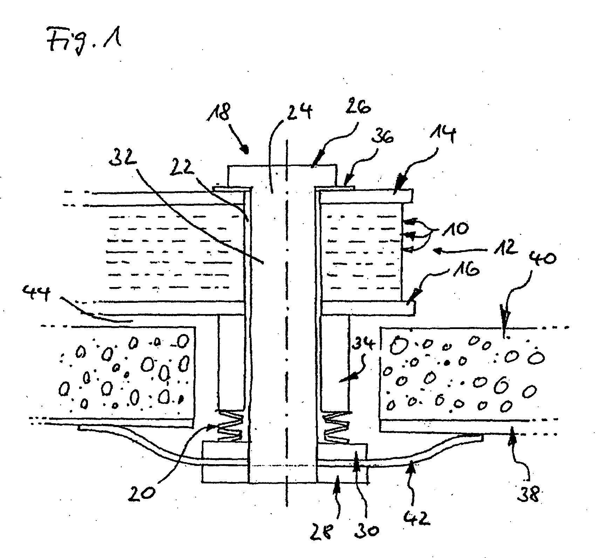

- Figur 1: eine Schnittansicht eines Teils einer Brennstoffzellenanordnung mit einer erfindungsgemäßen Vorrichtung.

Figur 1 zeigt eine Schnittansicht eines Teils einer erfindungsgemäßen Vorrichtung. Eine Mehrzahl von Brennstoffzellen 10 bilden zusammen ein Brennstoffzellenstapel 12, der an seinen Stapelenden von einer oberen Endplatte 14 und einer unteren Endplatte 16 begrenzt ist. Die Anordnung aus unterer Endplatte 16, Brennstoffzellenstapel 12 und oberer Endplatte 14 ist mit einer Durchgangsöffnung 22 versehen, die im vorliegenden Ausführungsbeispiel über ihre gesamte Länge einen zumindest nahezu konstanten Durchmesser hat. In diese Durchgangsöffnung 22 ist ein mit einer Abschlussplatte 26 ausgestatteter Zuganker 24 als Teil einer Kraftübertragungseinrichtung 18 eingeführt. Der Zuganker 24 ist im vorliegenden Ausführungsbeispiel mit einem im Wesentlichen zylindrischen Abschnitt 32 ausgestattet, mit dem er teilweise innerhalb der Durchgangsöffnung 22 angeordnet ist. Dies bietet sich bei einer zylindrischen Durchgangsöffnung an. Es sind aber auch andere Ausführungsbeispiele denkbar, bei denen der Zuganker eine anders geformte Außenkontur aufweist, beispielsweise auch außerhalb der Durchgangsöffnung 22. Der Zuganker 24 kann mit seiner Abschlussplatte 26 entweder direkt auf der oberen Endplatte 14 aufliegen oder, wie im vorliegenden Fall dargestellt, auf einer isolierenden Scheibe 36, was insbesondere dann nützlich ist, wenn der Zuganker 24 aus elektrisch leitendem Material gefertigt ist. Die isolierende Scheibe 36 ist entbehrlich, wenn der Zuganker 24 aus elektrisch isolierendem Material, beispielsweise einer elektrisch isolierenden Keramik, gefertigt ist. Am unteren Ende des Zugankers 24 ist dieser mit einem Endring 28, 30 ausgestattet, der im vorliegenden Ausführungsbeispiel zweiteilig ausgestaltet ist. An dem Endring 28, 30 stützt sich eine Feder 20 ab, die an ihrer anderen Seite einen Druckring 34 mit Kraft beaufschlagt. Dieser Druckring 34 übt seinerseits eine Kraft auf die untere Endplatte 16 aus. Somit werden auf die beiden Endplatten 14, 16 einander entgegengerichtete Kräfte ausgeübt.

Zwischen den beiden Teilen des zweiteiligen Endrings 28, 30 ist eine Tellerfeder 42 befestigt, die somit fest mit der Kraftübertragungseinrichtung 18 verbunden ist. Über diese Tellerfeder 42 stützt sich die Kraftübertragungseinrichtung 18 an der Außenwand eines Gehäuses 38 der Brennstoffzellenanordnung ab. Somit ist nicht nur der Brennstoffzellenstapel 12 mit den Endplatten 14, 16 elastisch mit Kraft beaufschlagt; vielmehr ist auch die gesamte Anordnung inklusive der Kraftübertragungseinrichtung 18 elastisch am Gehäuse 38 befestigt. Das Gehäuse 38 ist an seiner Innenseite mit einer Wärmeisolation 40 ausgestattet, um auf diese Weise eine übermäßige Wärmeabstrahlung vom Brennstoffzellenstapel 12 in den Außenbereich des Gehäuses 38 zu vermeiden. Insbesondere liegen in diesem Außenbereich des Gehäuses 38 auch die Tellerfeder 42 und, zumindest teilweise, die Feder 20, so dass diese Komponenten aus kostengünstigem Material gefertigt werden können, das keine besondere Hitzebeständigkeit, insbesondere auch nicht im Hinblick auf seine elastischen Eigenschaften, aufweisen muss. In weiteren Bereichen innerhalb des Gehäuses 38, insbesondere in Bereichen 44 zwischen der Wärmeisolation 40 und den Endplatten 14, 16 des Brennstoffzellenstapels ist vorzugsweise faserförmiges Isolationsmaterial vorgesehen, um so eine zusätzliche Wärmeisolierung zur Verfügung zu stellen und weiterhin eine zusätzliche Dämpfung gegen mechanische Schwingungen des Systems.

Im Rahmen der Beschreibung der vorliegenden Erfindung wurde die elastische Lagerung der Kraftübertragungseinrichtung 18 und damit des Brennstoffzellenstapels 12 am Gehäuse 38 mittels einer Tellerfeder 42 im Zusammenhang mit der erfindungsgemäßen Kraftübertragung unter Hinzuziehung elastischer Mittel 20 beschrieben. In diesem Zusammenhang ist zu bemerken, dass die elastische Lagerung auch losgelöst von der speziellen erfindungsgemäßen Kraftübertragungseinrichtung 18 sinnvoll sein kann, beispielsweise im Zusammenhang mit Verspanneinrichtungen, die die Kraft ohne spezielle elastische Mittel auf den Brennstoffzellenstapel übertragen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Brennstoffzellen
- 12: Brennstoffzellenstapel
- 14: erste Endplatte
- 16: zweite Endplatte
- 18: Kraftübertragungseinrichtung
- 20: Feder
- 22: Durchgangsöffnung
- 24: Zuganker
- 26: Abschlussplatte
- 28: Endring
- 30: Endring
- 32: zylindrischer Abschnitt
- 34: Druckring
- 36: isolierende Scheibe
- 38: Gehäuse
- 40: Wärmeisolation
- 42: Tellerfeder
- 44: Bereiche für Fasermaterial

## Patentansprüche

1. Vorrichtung zum Befestigen einer Brennstoffzellenanordnung an einem Gehäuse (38), **dadurch gekennzeichnet, dass** die Brennstoffzellenanordnung über ein mit einem Brennstoffzellenstapel (12) in Verbindung stehendes Element (24) unter Verwendung elastischer Mittel mit dem Gehäuse (38) in Verbindung steht.

2. Vorrichtung nach Anspruch 1, **dadurch gekennzeichnet, dass** der Brennstoffzellenstapel (12) mehrere Brennstoffzellen (10) und eine erste Endplatte (14) sowie eine zweite Endplatte (16) umfasst, die den Brennstoffzellenstapel (12) an seinen Stapelenden begrenzen, wobei mindestens eine Kraftübertragungseinrichtung (18) vorgesehen ist, die auf die erste Endplatte (14) eine erste Kraft in Richtung der zweiten Endplatte (16) und auf die zweite Endplatte (16) eine zweite Kraft in Richtung der ersten Endplatte (14) überträgt, wobei an der Kraftübertragung elastische Mittel (20) beteiligt sind.

3. Vorrichtung nach Anspruch 2, **dadurch gekennzeichnet,**
- **dass** der Brennstoffzellenstapel (12) und die Endplatten (14, 16) mindestens eine sich im Wesentlichen senkrecht zu den Endplatten erstreckende Durchgangsöffnung (22) aufweisen,
- **dass** in der mindestens einen Durchgangsöffnung (22) ein Kraftübertragungselement (24) angeordnet ist, das über die obere und die untere Endplatte hinausragt,
- **dass** das Kraftübertragungselement (24) an einem über eine erste Endplatte hinausragenden Bereich einen ersten Kraftaufnahmebereich (26) aufweist oder mit einem solchen in Verbindung steht, der sich mittelbar oder unmittelbar an der ersten Endplatte (14) abstützt, und
- **dass** das Kraftübertragungselement (24) an dem über die zweite Endplatte hinausragenden Bereich einen zweiten Kraftaufnahmebereich (28,30) aufweist oder mit einem solchen in Verbindung steht, der über die elastischen Mittel (20) eine Kraft auf die zweite Endplatte (16) ausübt.

4. Vorrichtung nach Anspruch 3, **dadurch gekennzeichnet,**
- **dass** das Kraftübertragungselement (24) einen im Wesentlichen zylindrischen Abschnitt (32) aufweist, der teilweise innerhalb der Durchgangsöffnung (22) angeordnet ist,
- **dass** der erste Kraftaufnahmebereich als Abschlussplatte (26) des zylindrischen Abschnitts (32) ausgebildet ist, die einen größeren Radius als die Durchgangsöffnung (22) durch die erste Endplatte (14) aufweist, und
- **dass** der zweite Kraftaufnahmebereich ein mit dem zylindrischen Abschnitt (32) in Verbindung stehender, den zylindrischen Abschnitt (32) umgebender Endring (28, 30) ist, wobei der Endring (28, 30) mehrteilig ausgebildet sein kann.

5. Vorrichtung nach Anspruch 4, **dadurch gekennzeichnet, dass** die elastischen Mittel als den zylindrischen Bereich umgebende Feder (20) ausgebildet sind, die sich auf dem den zylindrischen Abschnitt (32) umgebenden Endring (28, 20) abstützt.

6. Vorrichtung nach Anspruch 5, **dadurch gekennzeichnet, dass** die Feder (20) Kraft auf die zweite Endplatte (16) überträgt, indem sie sich an einem den zylindrischen Abschnitt (32) des Kraftübertragungselements umgebenden beweglichen Druckring (34) abstützt, der sich an seiner der Feder abgewandten Seite an der zweiten Endplatte (16) abstützt.

7. Vorrichtung nach einem der Ansprüche 3 bis 6, **dadurch gekennzeichnet, dass** das Kraftübertragungselement (24) zumindest vorwiegend aus elektrisch isolierendem Material besteht.

8. Vorrichtung nach einem der Ansprüche 3 bis 6, **dadurch gekennzeichnet,**
- **dass** das Kraftübertragungselement (24) zumindest vorwiegend aus Metall besteht und
- **dass** Isolationsmittel (36) zum Isolieren des Kraftübertragungselementes (24) gegen elektrisch leitende Bereiche des Brennstoffzellenstapels (12) beziehungsweise die Endplatten (14, 16) vorgesehen sind.

9. Vorrichtung nach einem der Ansprüche 4 bis 8, **dadurch gekennzeichnet, dass** der Endring (28, 30) axial verstellbar ist, so dass sich die von den elastischen Mitteln (20) aufgebrachte Kraft variieren lässt.

10. Vorrichtung nach einem der vorhergehenden Ansprüche, **dadurch gekennzeichnet, dass** die Brennstoffzellenanordnung ein Gehäuse (38) umfasst, das an seiner Innenseite eine Wärmeisolation (40) aufweist.

11. Vorrichtung nach Anspruch 10, **dadurch gekennzeichnet, dass** das Kraftübertragungselement (24) elastisch mit dem Gehäuse (38) in Verbindung steht.

12. Vorrichtung nach Anspruch 11, **dadurch gekennzeichnet, dass** die elastische Verbindung des Kraftübertragungselementes (24) mit dem Gehäuse (38) eine Tellerfeder (42) umfasst, die mit dem Kraftübertragungselement (24) verbunden ist und sich an der Außenseite des Gehäuses (38) abstützt.

13. Vorrichtung nach Anspruch 12, **dadurch gekennzeichnet,**
- **dass** der Endring (28, 30) zweiteilig ist und
- **dass** die Verbindung der Tellerfeder (42) mit dem Kraftübertragungselement (24) durch Einpressen der Tellerfeder (42) zwischen die Endringteile (28, 30) erfolgt.

14. Vorrichtung nach einem der Ansprühe 10 bis 13, **dadurch gekennzeichnet, dass** die elastischen Mittel (20) zur Übertragung von Kraft auf die Endplatten (14, 16) außerhalb des Gehäuses (38) angeordnet sind.

15. Vorrichtung nach einem der Ansprüche 10 bis 14, **dadurch gekennzeichnet, dass** den Brennstoffzellenstapel umgebende Bereiche (44) innerhalb des Gehäuses (38) mit faserförmigem Isolationsmaterial gefüllt sind.

16. Vorrichtung nach einem der Ansprüche 3 bis 15, **dadurch gekennzeichnet, dass** drei Durchgangsöffnungen (22) und drei diesen Durchgangsöffnungen zugeordnete Kraftübertragungselemente (24) vorgesehen sind.
